# EUROPEAN PATENT SPECIFICATION

(11) **EP 0 614 315 B1**
(45) Date of publication and mention of the grant of the patent: **11.11.1998**
(21) Application number: 94102617.1
(22) Date of filing: 22.02.1994
(51) Int. Cl.: H04N 7/087

(54) **Automatic display of auxiliary video information during audio muting**
Automatische Zusatzfernsehinformationsanzeige während der Stummschaltung
Affichage automatique d'information vidéo auxiliaire pendant la suppression du son

(30) Priority: 01.03.1993 US 18361
(43) Date of publication of application: 07.09.1994
(73) Proprietor: THOMSON CONSUMER ELECTRONICS, INC., Indianapolis Indiana 46201 (US)
(72) Inventor: Forler, Joseph Wayne, Indianapolis, IN (US); Landis, Michael David, Fishers, IN (US); Teskey, John Frederick, Indianapolis, IN (US)
(74) Representative: Wördemann, Hermes, Dipl.-Ing.

(56) References cited:
- EP-A- 0 059 666
- WO-A-81/02961

## Description

From WO 81/02961 an addressable cable television control system with video format data transmission is known.

And EP-A-0 059 666 discloses an entitled apparatus to display graphic messages transmitted by video text system.

The present invention relates to television systems that include capability for processing auxiliary video information such as closed caption data. The video signal processing section of a television system may include capability to decode and display auxiliary video information such as closed caption data. Closed caption data includes digital data in the form of ASCII characters that represent the audio information in a television signal. Display of closed caption data on a television display is intended to provide a visible representation of the audio program as an aid to hearing impaired television viewers. In the United States, the closed captioning standard is promulgated in Federal Communications Commission (FCC) regulations (see e.g. 47 CFR §§ 15.119 and 73.682). FCC regulations specify that digital closed caption data is transmitted in line 21 of field 1 in the video signal. Data representative of two ASCII characters is transmitted in each occurrence of line 21 in field 1. Future modifications to the standard may provide for closed caption data to be located in other lines, e.g. line 21 of every field.

Closed caption data is decoded from the video signal by a decoder. The decoded signal is coupled to the video display when closed captioning is enabled. Typically, a hearing impaired viewer enables closed captioning by activating a switch (e.g. on a remote control or on a control panel of a television) or by selecting closed captioning from a menu displayed on the video screen during a control mode of operation. Once activated, closed captioning remains enabled until disabled by the viewer. A viewer that is not hearing impaired would tend to disable closed captioning to avoid having the closed caption display encroach on the displayed video program.

A television system may also include an audio muting feature in the audio signal processing section. Activating audio muting causes the audio output from the television to be disabled. The volume control setting and the displayed video program are not affected. When audio muting is disabled, the normal audio output is reestablished without adjustment of the volume control. Audio muting may be activated, for example, via remote control, control panel, or displayed menu features in a manner similar to the activation of closed captioning.

Audio muting may be useful in a variety of circumstances. For example, a user may wish to disable the audio output (i.e. enable muting) when answering the phone or during a conversation. Although audio muting provides a useful effect by eliminating the noise of the audio program, a viewer may undesirably lose important information during audio muting if the viewer is relying on hearing the audio program as part of the enjoyment or comprehension of the television program.

The present invention, which is defined in claim 1, resides, in part, in recognition of the described problem and, in part, in providing a solution to the problem. More specifically, in accordance with the principles of the present invention, a system for processing a television signal includes video and audio signal processing channels for generating video and audio output signals, respectively. The video signal processing channel includes capability for decoding an auxiliary information signal component from the video signal and for including the auxiliary information signal in the video output signal. The audio signal processing channel includes capability for disabling generation of the audio output signal during a predetermined condition of the television system. In a particular operating mode of the system, the auxiliary information signal is included in the video output signal when generation of the audio output signal is disabled. Also, the auxiliary information signal is excluded from the video output signal when generation of the audio output signal is enabled

The invention may be better understood by referring to the enclosed drawing in which:
Figure 1 shows in block diagram form an embodiment of a portion of a television signal processing system incorporating the principles of the present invention;
Figure 2 illustrates in flowchart form the operation of an aspect of the embodiment depicted in Figure 1; and
Figure 3 depicts, partially in block diagram form and partially in logic diagram form, an embodiment of a feature shown in the block diagram in Figure 1.

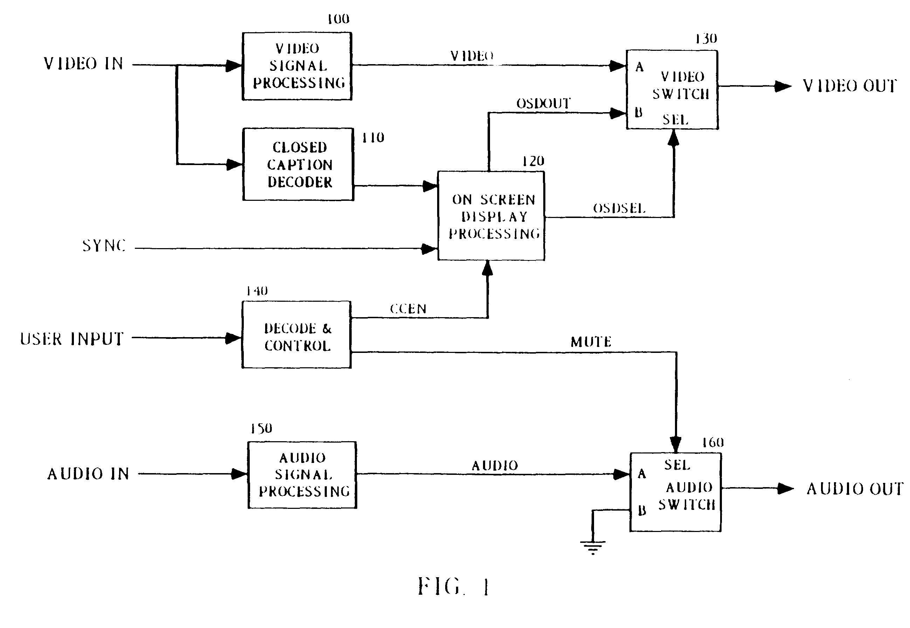

In Figure 1, a television signal processing system includes video signal processing channel 100 and audio signal processing channel 150 for processing respective video component VIDEO IN and audio component AUDIO IN of an input television signal. Video component VIDEO IN may include an auxiliary information component such as closed caption (CC) data that is decoded from the video component by closed caption decoder 110. On-screen display (OSD) processor 120 responds to signals including the decoded closed caption data to generate on-screen display signal OSDOUT. OSD processor 120 is enabled to produce a display of closed caption data in response to an appropriate level on signal CCEN (e.g. logic 1). Other applications of OSD processor 120 include generation of a channel number indicator display or generation of menu displays that permit a user to control features such as volume by selecting menu items.

OSD processor 120 also controls the portion of the video display in which OSD information such as closed caption data is displayed via video switch 130. Switch 130 responds to signal OSDSEL from OSD processor 120 to select the source of signal VIDEO OUT. For example, signal OSDSEL at logic 0 causes switch 130 to couple signal VIDEO to signal VIDEO OUT and signal OSDSEL at logic 1 causes signal OSDOUT to be coupled to signal VIDEO OUT. When on-screen display information is to be displayed, signal OSDOUT is coupled to signal VIDEO OUT.

To ensure that OSD information is displayed at the correct time, i.e. in the correct portion of the video display, the operation of OSD processor 120 is synchronized with the operation of video processor 100 via one or more synchronization signals represented by signal SYNC in Figure 1. Signal SYNC may include vertical and horizontal sync signals such as those produced by deflection and sync separator functions. Briefly, synchronization to video input signal VIDEO IN via signal SYNC makes it possible for OSD processor to determine when particular video lines and video fields begin. For example, OSD processor 120 may initialize a counter in response to a vertical sync signal and count horizontal lines in response to a horizontal sync signal. In addition, OSD processor 120 may include a counter that is initialized in response to horizontal sync signals and counts delay (i.e. position) within each horizontal line. When the horizontal line count and the horizontal delay count indicates that the "OSD portion" of the video display is to be displayed, OSD processor 120 generates an appropriate level (e.g. logic 1) on signal OSDSEL to couple signal OSDOUT to signal VIDEO OUT.

Also in Figure 1, audio signal processing channel 150 processes audio component AUDIO IN to produce signal AUDIO. Audio mute capability is provided illustratively in Figure 1 by audio switch 160 operating in response to signal MUTE. When audio output is enabled (e.g. signal MUTE at logic 0), switch 160 couples signal AUDIO to signal AUDIO OUT. When audio muting is enabled (e.g. signal MUTE at logic 1), switch 160 decouples signal AUDIO from signal AUDIO OUT and couples signal AUDIO OUT to ground, thereby preventing an audio output signal from being produced.

Signals CCEN and MUTE are generated by decode and control unit 140 in response to user input information indicated as signal USER INPUT in Figure 1. For example, a television viewer may activate a switch on a remote control to select muting. Decode unit 140 detects activation of the switch, determines the function selected, and provides the appropriate control signals. In the case of a function such as muting, activation of a muting switch may cause the existing state of muting control signal MUTE to be toggled. For example, if signal MUTE is at logic 0 indicating that muting is disabled, activating a muting switch will cause signal MUTE to become logic 1 enabling muting. When muting is enabled, activating the muting switch will disable muting.

Signal CCEN is generated in response to user input commands related to closed captioning modes of operation. For example, typical closed captioning modes of operation may include enabling closed captioning at all times (e.g. for a hearing impaired viewer) or disabling closed captioning at all times (e.g. for viewers who are not hearing impaired). These modes of operation may be selected via an appropriate user input feature (e.g. a remote control, a control panel, or selection of a menu item in a displayed menu). Selecting closed captioning at all times provides display of closed caption when audio muting is both enabled and disabled. This mode of operation is referred to herein as "closed caption with audio" mode. To control closed caption with audio mode of operation, decode and control unit 140 generates signal CCEN by toggling the present state of signal CCEN in a manner similar to the described toggling of signal MUTE.

Decode and control unit 140 also generates signals CCEN and MUTE to provide a mode of operation referred to herein as "closed caption with mute" mode in which closed captioning is automatically enabled and disabled in response to enabling and disabling, respectively, of muting. As with closed caption with audio mode, closed caption with mute mode of operation may be selected by activating an appropriate user input feature. During closed caption with mute mode, signal MUTE automatically causes signal CCEN to enable OSD processor 120 to generate a closed caption display. When signal MUTE disables muting, signal CCEN disables closed captioning. Once closed caption with mute mode is selected, a user may visibly monitor the audio program during muting by activating only the muting control.

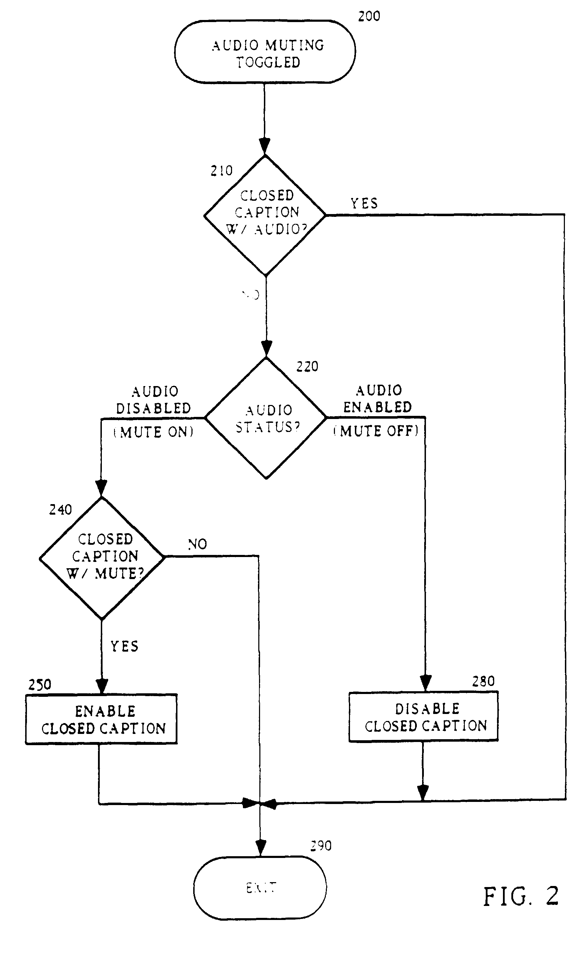

The described functions of decode and control unit 140 may be produced by a microprocessor under appropriate software control. Figure 2 shows a flowchart illustrating an approach to microprocessor generation of signals CCEN and MUTE. When a muting switch is activated (or the status of a menu item relating to muting is changed), signal MUTE is toggled as described above. In response to the change in state of signal MUTE, the microprocessor enters the routine shown in Figure 2 at step 200. At step 210, the microprocessor determines whether or not the user has selected closed caption with audio mode of operation by, for example, testing a flag that is set when a user selects that mode of operation. If closed caption with audio mode is selected, a closed caption display is generated at all times independent of the status of muting. As a result, no testing of the muting status is required and the microprocessor exits the routine in Figure 2 at step 290.

If closed caption with audio mode is not selected, operation continues at step 220 where the status of audio muting is tested by, for example, testing the state of signal MUTE. The test at step 220 occurs after the state of signal MUTE is toggled at step 200. If muting is enabled, operation proceeds from step 220 to step 240 where the microprocessor determines whether or not closed caption with mute mode is selected by, for example, testing an appropriate flag. If closed caption with mute mode is selected, closed captioning is enabled at step 250 by the microprocessor establishing the appropriate state of signal CCEN in Figure 1 (e.g. a logic 1 to enable closed captioning). The microprocessor then exits the routine in Figure 2 at step 290. If closed caption with mute mode is not selected, step 250 is bypassed and the microprocessor proceeds directly to step 290 exiting the routine.

When the audio status test at step 220 indicates that muting is disabled, operation continues at step 280 rather than step 240. A necessary condition for reaching the audio status test at step 220 is that closed caption with audio mode is not selected (test at step 210). Therefore, if step 220 indicates that muting is disabled (i.e. audio enabled), closed captioning is disabled. This is accomplished at step 280 where closed captioning is disabled by establishing the appropriate state of signal CCEN (e.g. logic 0). Following step 280, the routine is exited at step 290.

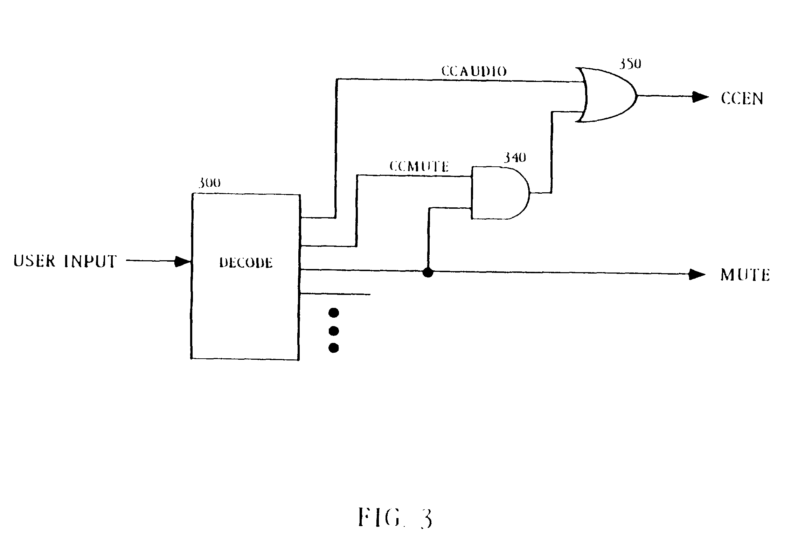

Figure 3 shows a digital logic approach to implementing certain features depicted in the flowchart in Figure 2. In Figure 3, decode unit 300 may be hard-wired decode logic or a microprocessor that interprets user commands USER INPUT. Decode unit 300 generates various control signals including signals CCAUDIO, CCMUTE, and MUTE. Signals CCAUDIO and CCMUTE indicate that closed caption with audio and closed caption with mute modes of operation are selected, respectively. Signal MUTE is representative of the muting status as described above. All three signals are held constant by decode unit 300 until user input changes the state of the closed caption mode or muting.

In Figure 3, signal CCAUDIO at logic 1 indicates that closed caption with audio mode is selected. OR gate 350 responds to signal CCAUDIO at logic 1 by causing signal CCEN to be at logic 1, thereby enabling closed captioning independent of signal MUTE. If closed caption with audio mode is not selected (i.e. signal CCAUDIO at logic 0), closed captioning may be enabled via AND gate 340 when closed caption with mute mode is selected (signal CCMUTE at logic 1) and muting is selected (signal MUTE at logic 1). Signal CCEN is at logic 0 (i.e. closed captioning disabled) if signals CCAUDIO and CCMUTE are both at logic 0. The arrangement in Figure 3 may be modified to accommodate enabling closed captioning in additional operating modes by adding an input to OR gate 350 to receive each additional control signal for enabling closed captioning.

Either implementation of decode and control unit 140, i.e. the microprocessor based control approach shown in Figure 2 or the digital logic approach in Figure 3, may be included within the functions of OSD processor 120. Also, functions such as closed caption decoder 110, decode and control unit 140, and OSD processor 120 may included in a single OSD integrated circuit.

Although the present invention is described in the context of user control of an audio muting function, the present application may also be useful in situations where muting is activated automatically during a particular operating mode of a television system. In addition, the invention may be useful in television systems that provide for processing types of auxiliary video information other than closed captioning, e.g. teletext.

## Claims

1. A system for processing a television signal including a video component and a related audio component corresponding to respective visible and audible portions of the same television program, said audio portion containing a spoken portion related to said visible portion of said television program, said video component containing an auxiliary information component corresponding to a visible representation of said spoken portion of said television program, said system comprising:
means (100) responsive to said video component for generating a video output signal (VIDEO) corresponding to said visible portion of said television program;
means (110,120) responsive to said auxiliary information component for selectively generating an auxiliary information output signal (OSDOUT) corresponding to said visible representation of said spoken portion of said television program;
switch means (130) for including said auxiliary information output signal, when generated, in said video output signal for displaying said visible representation of said spoken portion of said television program together with said related visible portion of said television program;
means (150) responsive to said audio component for generating an audio signal (AUDIO) corresponding to said audible portion of said television program;
**characterized by:**
means (160) for inhibiting said audio signal (AUDIO), when generated, from being included in an audio output signal (AUDIO OUT) of said system during a predetermined operating condition of said system; and
means (140) responsive to said predetermined operating condition of said system for, in a first mode, controlling said switch means (130) to include said auxiliary information output signal in said video output signal during said predetermined operating condition, and for, in a second mode, controlling said switch means (130) to exclude said auxiliary information output signal from said video output signal during said predetermined operating condition.

2. The system of claim 1 wherein:
said means (140) responsive to said predetermined operating condition is responsive to activation by a user for generating a control signal (MUTE);
said audio output signal inhibiting means (160) is an audio muting circuit responsive to said control signal for disabling the generation of said audio output signal during said predetermined operating condition; and
said auxiliary information output signal generating means (110, 120), in said first mode, is responsive to said control signal for generating said auxiliary information output signal when audio muting is enabled and, in said second mode, is not responsive to said control signal for generating said auxiliary information output signal when said audio muting is disabled.

3. The system in claim 2 wherein said auxiliary information output signal comprises a closed caption signal.

4. The system recited in claim 1, wherein:
said auxiliary information output signal generating means (110, 120) is selectively enabled to generate or disabled from generating said auxiliary information output signal during said predetermined operating condition in response to activation of an input device by a user (USER INPUT).

## Patentansprüche

1. System zum Verarbeiten eines Fernsehsignals mit einer Videokomponente und einer zugehörigen Audiokomponente, die jeweils sichtbaren und hörbaren Teilen desselben Fernsehprogramms entsprechen, wobei der Audioteil einen zu dem sichtbaren Teil des Fernsehprogramms gehörenden Sprachteil enthält und die Videokomponente eine zusätzliche Informationskomponente enthält, die einer sichtbaren Darstellung des Sprachteils des Fernsehprogramms entspricht, wobei das System folgendes enthält:
auf die Videokomponente ansprechende Mittel (100) zum Erzeugen eines Videoausgangssignals (VIDEO), das dem sichtbaren Teil des Fernsehprogramms entspricht,
auf die zusätzliche Informationskomponente ansprechende Mittel (110, 120) zum selektiven Erzeugen eines zusätzlichen Informations-Ausgangssignals (OSDOUT), das der sichtbaren Darstellung des Sprachteils des Fernsehprogramms entspricht, Schaltmittel (130) zum Einfügen des zusätzlichen Informations-Ausgangssignals, wenn es erzeugt wird, in das Videoausgangssignal zur Wiedergabe der sichtbaren Darstellung des Sprachteils des Fernsehprogramms zusammen mit dem zugehörigen sichtbaren Teil des Fernsehprogramms,
auf die Audiokomponente ansprechende Mittel (150) zum Erzeugen eines Audiosignals (AUDIO), das dem hörbaren Teil des Fernsehprogramms entspricht,
gekennzeichnet durch:
Mittel (160), die verhindern, daß das Audiosignal (AUDIO), wenn es erzeugt wird, in dem Audioausgangssignal (AUDIO OUT) des Systems während eines vorbestimmten Betriebszustandes des Systems enthalten ist, und
Mittel (140), die auf den vorbestimmten Betriebszustand des Systems ansprechen, um in einem ersten Modus die Schaltmittel (130) so zu steuern, daß das zusätzliche Informations-Ausgangssignal in dem Videoausgangssignal während eines vorbestimmten Betriebszustandes enthalten ist, und in einem zweiten Modus die Schaltmittel (130) so zu steuern, daß das Ausgangssignal für die zusätzlichen Informationen während des vorbestimmten Betriebszustandes aus dem Videoausgangssignal entfernt wird.

2. System nach Anspruch 1, wobei
die Mittel (140), die auf den vorbestimmten Betriebszustand ansprechen, auf eine Aktivierung durch einen Benutzer ansprechen, um ein Steuersignal (MUTE) zu erzeugen,
die Mittel (160) zum Sperren des Audioausgangssignals durch eine Stummschaltung gebildet sind, die auf das Steuersignal anspricht und die Erzeugung des Audioausgangssignals während des vorbestimmten Betriebszustandes abschaltet, und
die Mittel (110, 120) zum Erzeugen des Ausgangssignals für die Zusatzinformationen in dem ersten Modus auf das Steuersignal ansprechen und das Ausgangssignal für die Zusatzinformation erzeugen, wenn die Stummschaltung eingeschaltet ist, und
in dem zweiten Modus auf das Steuersignal nicht ansprechen und das Ausgangssignal für die Zusatzinformation erzeugen, wenn die Stummschaltung abgeschaltet ist.

3. System nach Anspruch 2, wobei das Ausgangssignal für die Zusatzinformationen ein Untertitelsignal enthält.

4. System nach Anspruch 1, wobei:
die Mittel (110, 120) zum Erzeugen des Ausgangssignals für die Zusatzinformationen selektiv eingeschaltet werden, um die Erzeugung des Ausgangssignals für die Zusatzinformationen während des vorbestimmten Betriebszustandes aufgrund einer Aktivierung einer Eingabeeinheit durch einen Benutzer (BENUTZER-EINGABE) zu erzeugen oder zu sperren.

## Revendications

1. Un système pour traiter un signal de télévision comportant une composante vidéo et une composante son associée correspondant aux parties visible et audible respectives d'un même programme de télévision, ladite partie son contenant une partie parlée relative à ladite partie visible dudit programme de télévision, ladite composante vidéo contenant une composante information auxiliaire correspondant à une représentation visible de ladite partie parlée dudit programme de télévision, ledit système comprenant :
des moyens (100) répondant à ladite composante vidéo pour générer un signal de sortie vidéo (VIDEO) correspondant à ladite partie visible dudit programme de télévision ;
des moyens (110, 120) répondant à ladite composante information auxiliaire pour générer sélectivement un signal de sortie d'information auxiliaire (OSDOUT) correspondant à ladite représentation visible de ladite partie parlée dudit programme de télévision ;
un moyen de commutation (130) pour inclure ledit signal de sortie d'information auxiliaire lorsque généré, dans ledit signal de sortie vidéo pour l'affichage de ladite représentation visible de ladite partie parlée dudit programme de télévision ensemble avec ladite partie visible associée dudit programme de télévision ;
des moyens (150) répondant à ladite composante son pour générer un signal son (AUDIO) correspondant à ladite partie audible dudit programme de télévision ;
caractérisé par :
des moyens (160) pour empêcher que ledit signal son (AUDIO) lorsque généré ne soit inclus dans un signal de sortie son (AUDIO OUT) dudit système durant une condition de fonctionnement prédéterminée dudit système ; et
des moyens (140) répondant à ladite condition de fonctionnement prédéterminée dudit système pour, dans un premier mode, commander ledit moyen de commutation (130) de manière à inclure ledit signal de sortie d'information auxiliaire dans ledit signal de sortie vidéo durant ladite condition de fonctionnement prédéterminée, et pour, dans un second mode, commander ledit moyen de commutation (130) pour exclure ledit signal de sortie d'information auxiliaire dudit signal de sortie vidéo durant ladite condition de fonctionnement prédéterminée.

2. Le système de la revendication 1 dans lequel :
lesdits moyens (140) répondant à ladite condition de fonctionnement prédéterminée répondent à une activation par un utilisateur pour générer un signal de commande ( MUTE) ;
ledit moyen inhibant le signal de sortie son (160) est un circuit de suppression du son répondant au dit signal de commande pour empêcher la génération dudit signal de sortie son durant ladite condition de fonctionnement prédéterminée : et
un moyen générant un signal de sortie d'information auxiliaire (110, 120), dans ledit premier mode, répond au signal de commande pour générer ledit signal de sortie d'information auxiliaire lorsque la suppression du son est autorisée et, dans ledit second mode, ne répond pas au dit signal de commande pour générer ledit signal de sortie d'information auxiliaire lorsque ladite suppression du son n'est pas autorisée.

3. Le système de la revendication 2 dans lequel ledit signal de sortie d'information auxiliaire comporte un signal de sous-titrage.

4. Le système selon la revendication 1, dans lequel :
ledit moyen générant un signal de sortie d'information auxiliaire (110, 120) est sélectivement autorisé à générer ou non autorisé à générer ledit signal de sortie d'information auxiliaire durant ladite condition de fonctionnement prédéterminée en réponse à l'activation d'un dispositif d'entrée par l'utilisateur (USER INPUT).
